# FASCICULE DE BREVET EUROPEEN

(11) **EP 1 011 901 B1**
(45) Date de publication et mention de la délivrance du brevet: **24.07.2002**
(21) Numéro de dépôt: 98947532.2
(22) Date de dépôt: 28.08.1998
(51) Int. Cl.: B23B 29/24

(54) **TETE DE TOURNAGE ROTATIVE A AU MOINS DEUX OUTILS**
DREHKOPF MIT MINDESTENS ZWEI WERKZEUGEN
ROTARY TURNING ATTACHMENT EQUIPPED WITH AT LEAST TWO TOOLS

(30) Priorité: 08.09.1997 CH 210197
(43) Date de publication de la demande: 28.06.2000
(73) Titulaire: Seppta Research (Ontario) Inc., Nobzko Rockwood, Ontario (CA)
(72) Inventeur: WILLEN, Charles, Gérard, CH-1844 Villeneuve (CH)
(74) Mandataire: Kiliaridis, Constantin
(86) Numéro de dépôt international: EP9805706
(87) Numéro de publication internationale: WO9912684

(56) Documents cités:
- DE-A- 2 746 232
- DE-A- 3 920 969
- DE-A- 19 503 486
- DE-B- 1 034 455
- FR-A- 1 407 886
- FR-A- 2 319 447

## Description

La présente invention concerne une tête de tournage selon le préambule de la revendication 1.

Une telle tête de tournage rotative est decrite dans le DE-A-2746232.

La presente invention se réfère plus particulièrement aux têtes de tournage cylindriques équipées de porte-plaquettes interchangeables pour plaquettes normalisées ISO. Ces têtes sont destinées aux broches de machines-transferts et aux machines spéciales. Durant plusieurs années, ce type de machine ne convenait qu'à la production en. grandes séries de pièces s'usinant relativement facilement. Les exigences actuelles plus élevées en précision et en productivité, les efforts permanents pour réduire les coûts de production, les progrès considérables de plaquettes de coupe permettant d'envisager la mise en oeuvre de ces machines pour des séries moyennes, voire de petites séries, et dans des matériaux difficiles à usiner. Les changements de production sont beaucoup plus fréquents. Ainsi, il est nécessaire de diminuer drastiquement le temps improductif, en réduisant le temps de réglage qui est encore relativement long. Souvent, l'usinage d'un matériau difficile et les tolérances serrées imposent de fréquentes interventions pour des micro-ajustements ou le changement des outils de coupe ou de plaquettes.

La plupart des fabricants de machines-transferts ont leur propre système d'outillage et les utilisateurs n'ont guère le choix et doivent supporter les inconvénients de cette situation. Souvent, également, l'espace disponible fort restreint, limite l'utilisation des porte-outils normalisés classiques ou à changement rapide.

Un besoin réel d'amélioration et rationaliation existe, bien que les utilisateurs se débrouillent aux mieux; ils sont cependant toujours dans l'attente d'un outillage rationnel répondant à leurs besoins.

Le but de la présente invention est de proposer une tête de tournage rotative très compacte adaptée aux broches de machines-outils habituelles et normalisées. Ainsi, par exemple, pour la tête présentée selon l'invention, le diamètre extérieur est de 42, 50, 63 ou 83 mm avec un diamètre de travail entre les arêtes coupantes des plaquettes pouvant varier entre 2 et 48 mm. Des têtes plus grandes sont évidemment aussi réalisables.

La tête de tournage selon l'invention est caractérisée par la clause caractérisante de la revendication 1.

L'avantage de cette tête de tournage est que malgré ces faibles dimensions, on arrive à loger dans son volume relativement petit des moyens assurant un réglage précis du déplacement des outils de coupe.

Selon une variante d'exécution, lorsque le besoin s'en ressent et en fonction du diamètre de la tête, un alésage concentrique permet de fixer un outil de coupe coaxial avec une vis disposée radialement dans le corps.

A partir d'une certaine grandeur, un écrou de pince peut venir se loger au centre et permet, avec le concours d'une douille conique placée directement dans la broche de la machine sur laquelle la tête est montée, de fixer un outil coaxial au moyen de pinces bi-coniques normalisées (DIN 6499) ou similaires.

Selon une autre variante d'exécution, le blocage du coulisseau est obtenu par la déformation des plaques au moyen d'une vis de serrage agissant sur la partie du coulisseau située dans la coulisse, déformation facilitée par un dégagement approprié dans la face du corps, sous chaque plaque semi-circulaire. Les plaques peuvent aussi être amincies localement pour adapter leur flexibilité.

Selon une autre variante d'exécution, les vis micrométriques commandant le déplacement du coulisseau sont retenues en place par des goupilles engagées dans une gorge près de la tête de la vis correspondante.

Selon une autre variante d'exécution les coulisseaux sont équipés pour permettre aussi un réglage axial de l'outil supporté par un porte-outil.

De manière préférentielle, les coulisseaux sont pourvus d'une face dentée orientée axialement pour y fixer les porte-outils interchangeables munis d'une ouverture oblongue s'étendant axialement laissant passer l'organe de fixation.

Selon une variante d'exécution préférée, le porte-outil est muni d'un organe de réglage axial se déplaçant parallèlement au sens de réglage en s'appuyant sur une surface du coulisseau perpendiculaire audit sens de déplacement.

De manière préférentielle, l'organe de fixation et l'organe de réglage axial sont, d'une part une vis de fixation et, d'autre part, une vis de butée autofreinée incorporée aux porte-outils.

Il est évident qu'une clavette ou un emboîtement entre les deux faces plates du coulisseau et du porte-outil peuvent également constituer un guidage axial du réglage et de positionnement. Néanmoins, pour réaliser cette construction courte et rigide dans un espace très restreint sans affaiblir la résistance du coulisseau et des porte-outils aux efforts de coupe, aux risques des vibrations et à la force centrifuge à haute vitesse, il a fallu conserver des nervures judicieusement situées qui maintiennent une section suffisante dans les deux éléments.

Au surplus, la vis-butée de réglage axial est incorporée dans les porte-outils à un endroit favorable de manière qu'en butant contre le coulisseau elle contribue à la rigidité des deux éléments assemblés. Une autre particularité de cette construction permet d'assurer automatiquement, lors du serrage des porte-outils un appui ferme axialement de la vis butée contre le coulisseau. En effet, selon une variante d'exécution, la face des porte-outils sur laquelle agit la tête de la vis de fixation est légèrement inclinée de manière qu'en tournant à droite pour bloquer, la face de la tête de la vis agisse préférentiellement du côté où cela engendre une force concomitante plaquant également axialement le porte-outil contre le coulisseau par l'intermédiaire de la vis-butée de réglage axial. Cette caractéristique assure donc aussi en plus d'un accroissement de la rigidité, une amélioration de la précision du réglage axial en éliminant tout risque de léger mouvement de recul du porte-outil par rapport au coulisseau lors de son blocage par la vis de fixation transversale. Cette dernière peut dépasser le coulisseau et être ainsi munie d'un écrou de sécurité complémentaire, en fonction des dimensions de la tête, bien entendu.

Les particularités nouvelles de la construction de ces têtes offrent des facilités de réglage et des performances d'usinage simultanées uniques pour des tètes si compactes avec une telle capacité. De telles têtes ont une capacité de travail d'un diamètre maximum de 48 mm pour un diamètre extérieur de la tête de 83 ou une capacité de 22 mm de diamètre pour un diamètre extérieur de 52 mm, par exemple.

L'invention sera décrite plus en détails à l'aide du dessin annexé illustrant une exécution selon l'invention.

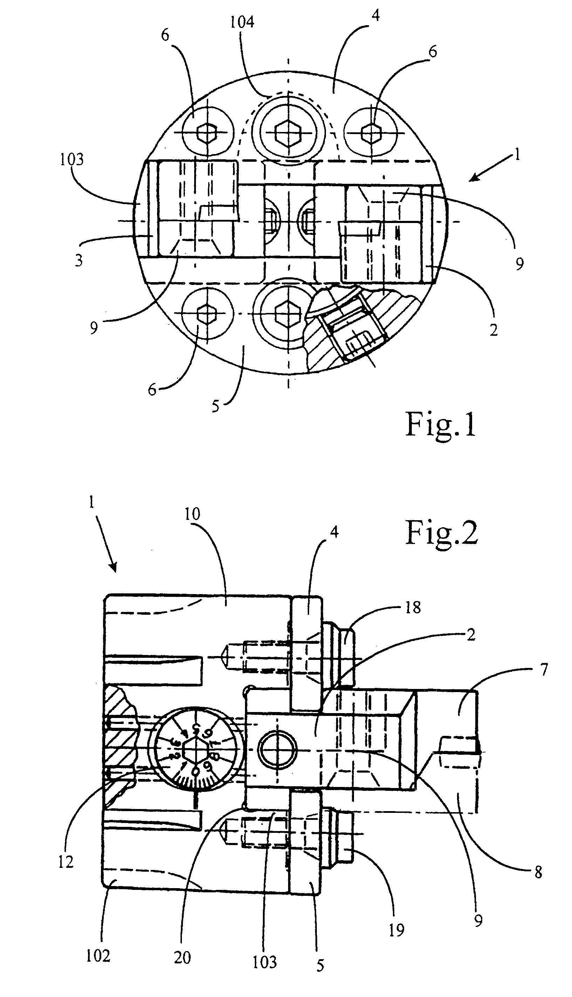

La figure 1 est une vue de dessous de la tète de tournage à deux coulisseaux.

La figure 2 est une vue de côté de la même tête.

La figure 3 est une vue de côté et partiellement en coupe de la tête de la figure 2 tournée de 90° autour de l'axe de rotation.

La figure 4 est une vue de côté du coulisseau.

La figure 5 est une vue de côté tournée de 90° par rapport à la figure 4 et partiellement en coupe et

La figure 6 est une vue de droite de la figure 4.

La figure 7 est une vue similaire à celle de la figure 3 d'une tête à quatre coulisseaux.

La tête de tournage comprend un corps 1 formé d'une pièce cylindrique 10 présentant à une extrémité un alésage 101 muni de moyens pour que la tête soit assemblée à la broche de la machine-outil. Des moyens 102 permettant la prise par un- outil de serrage, tandis que sur l'autre face deux creusures essentiellement rectangulaires s'étendent le long d'un diamètre de la face du cylindre formant une coulisse 103 à l'intérieur de laquelle glissent deux coulisseaux 2 et 3.

Si la tête de tournage comportait d'autres coulisseaux, les coulisses partiraient du centre de la tête symétriquement.

La face avec la coulisse 103 est munie de deux plaques couvercles semi-circulaires 4 et 5 couvrant partiellement la coulisse 103 pour permettre la tenue des coulisseaux 2 et 3 dans le sens axial. Les plaques 4 et 5 sont vissées sur la tête 10 par des vis 6 après la mise en place des coulisseaux 2 et 3.

Dans le cas d'une tête à quatre coulisseaux, on aurait recours à quatre plaques agissant chacune sur deux coulisseaux.

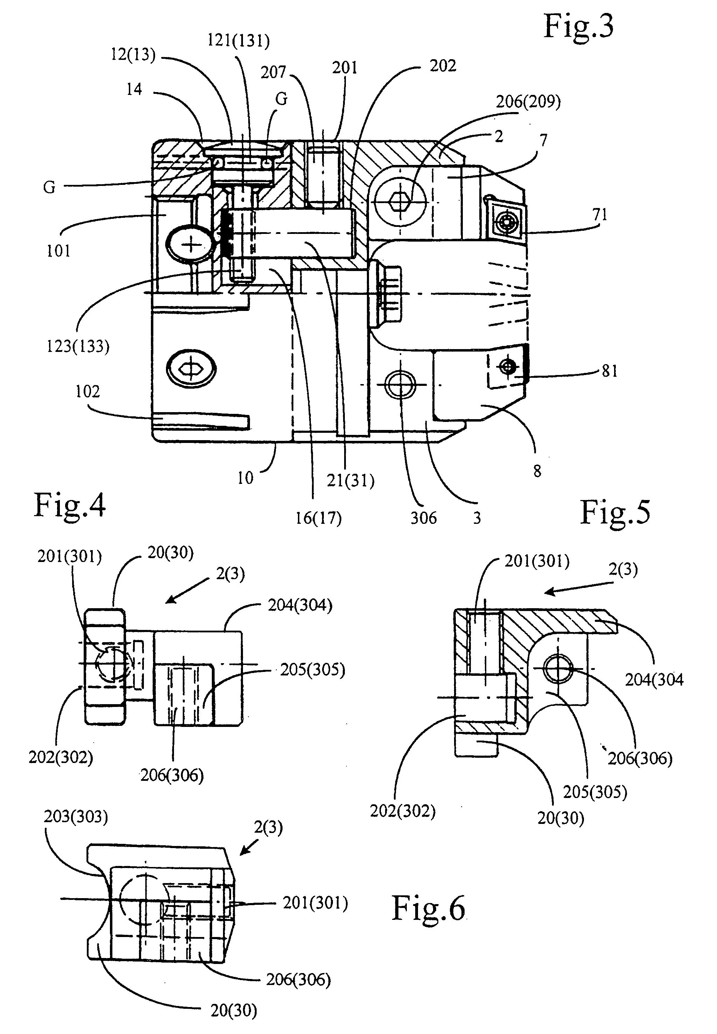

Nous décrivons maintenant à l'aide des figures 4 à 6 les coulisseaux. On se contentera de décrire le coulisseau 2 et entre parenthèses, sur lesdites figures, nous avons indiqué les références du deuxième coulisseau 3. Le coulisseau 2 comprend une tête 20 de forme rectangulaire et dont les dimensions lui permettent de s'engager dans la coulisse 103 de la tête 10 du corps cylindrique. La tête 20 (voir figure 5) présente deux logements perpendiculaires 201 et 202. Le premier est taraudé et permet de loger une vis 207 destinée à bloquer dans le logement 202 un écrou 21. Lorsqu'il s'agit d'une tête dont le corps 1 présente un alésage concentrique à l'axe supplémentaire pour le logement d'un outil, la face de la tête du coulisseau orientée vers l'axe de la tête présente un dégagement arrondi 203 (figure 6) pour augmenter la course possible du coulisseau.

Le coulisseau présente une projection de retenue des porte-outils constituée d'une partie présentant une certaine épaisseur en forme de L 204 et une deuxième partie 205 de plus faible épaisseur dans laquelle un taraudage 206 permet la fixation au moyen d'une vis 9 d'un porte-outil 7, respectivement 8. Le porte-outil porte, en principe, des plaquettes 71, respectivement 81. Le déplacement individuel de chaque coulisseau est réalisé par une vis micrométrique 12, respectivement 13 munie d'une gorge 121 et d'un corps de vis fileté 123 fixée dans un logement 14, respectivement 15. Les logements 14 et 15 sont disposés symétriquement par rapport à l'axe de rotation du corps 10et s'étendant de la surface latérale du corps cylindrique vers le centre et aboutissant dans un logement de dimensions supérieures 16, respectivement 17. Ces logements 16 et 17 sont en communication avec la coulisse 103 sur une certaine longueur pour permettre le passage de l'écrou 21, respectivement 31 et son déplacement lors du réglage de la position du coulisseau respectif.

Chaque vis micrométrique 12, respectivement 13, est fixée dans ledit logement au moyen de deux goupilles G qui s'engagent dans les gorges respectives 121 et 131.

Pour obtenir le meilleur fonctionnement, on peut faire le montage de la tête de la manière suivante : Préalablement, on introduit les écrous 21, 31 dans les coulisseaux 2, 3 à l'état non percé-taraudé, que l'on bloque à l'aide des vis 207 et 307.

Ensuite, on engage les coulisseaux 2 et 3, avec leurs écrous dans les coulisses 103 du corps 10 de la tête et l'on fixe les plaques semi-circulaires 4 et 5 avec leurs vis de fixation 6 ; on monte également les vis de blocage 18 et 19 et on bloque les coulisseaux en position extrême extérieure.

Ensuite, on peut exécuter les perçages-taraudages dans les écrous 21 et 31 en se centrant et s'alignant exactement dans les alésages 14 et 15, obtenant ainsi une parfaite co-axialité avec les vis micrométriques 12 et 13.

Puis, après nettoyage, on peut visser les vis micrométriques dans les écrous 2 et 3 jusqu'en position d'alignement des gorges 121 et 131 avec les trous dans le corps 10 destinés aux goupilles d'arrêt G, et on chasse les goupilles d'arrêt.

Les divers composants peuvent être repérés pour retrouver leur position originale en cas de démontage et remontage.

Par la suite, après avoir réglé la position des outils de coupe au moyen des vis micrométriques 12, respectivement 13, on bloque en position les coulisseaux en agissant sur deux écrous ou vis 18, respectivement 19 qui déforment légèrement les plaques semi-circulaires, déformation facilitée par les dégagements 104 aménagés sur la face du corps serrant ainsi les coulisseaux dans la coulisse. Un amincissement des plaques peut augmenter leur flexibilité si souhaité. La division graduée sur la face de la tête des vis micrométriques facilite la lecture du réglage. Des micro-ajustements peuvent aussi se faire à l'aide d'un comparateur montrant le déplacement exact effectif des coulisseaux. Dans de nombreux cas, la tête est préréglée et montée ensuite sur la broche de la machine.

Si le diamètre de la tête le permet, un alésage central est prévu dans lequel peut être fixé un outil supplémentaire, par exemple au moyen d'une ou plusieurs vis radiales non représentées.

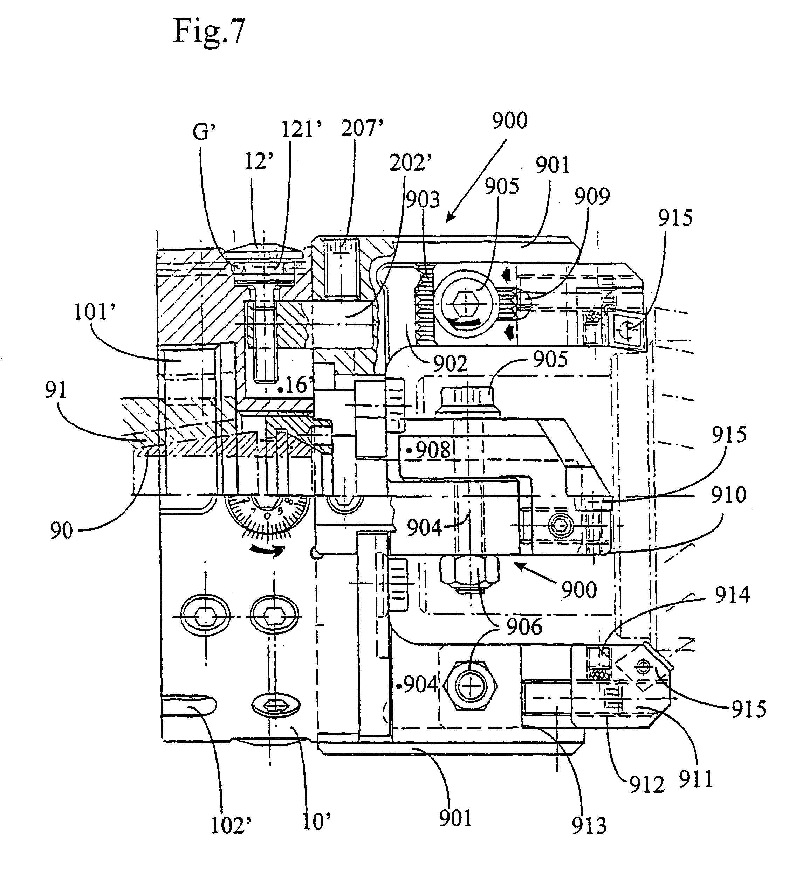

En se référant maintenant a la figure 7, nous avons représenté une tête de tournage dans une vue similaire à celle de la figure 3 à l'exception que cette tête est d'un diamètre beaucoup plus grand et elle est munie de quatre coulisseaux dont trois sont vus sur cette figure.

Nous n'allons pas décrire encore une fois le corps de la tête et nous avons indiqué uniquement quelques références qui sont les mêmes que celles de la figure 3 sauf qu'elles sont accentuées.

Concernant les éléments qui sont vraiment différents par rapport à la tête de la figure 3 et mis à part le fait que la tête est prévue pour quatre coulisseaux, ce sont les coulisseaux eux-mêmes puisqu'ils sont munis de moyens pour permettre en plus du réglage radial un réglage axial.

Un autre élément nouveau est le fait que le diamètre de cette tête permet de prévoir coaxialement à l'axe de ladite tête une pince bi-conique 90 fixée dans une douille conique 91 de la broche de la machine sur laquelle la tête 10' sera fixée. Ainsi, en utilisant un écrou approprié dans le corps de la tête on peut monter coaxialement à cette tête un autre outil de coupe. Ce type de montage avec une pince bi-conique 90 est connue et normalisée. Il serait également possible d'utiliser un autre type d'attachement si le diamètre de la tête permet de loger cet attachement coaxialement à la tête.

Nous retournons maintenant sur la description du coulisseau avec réglage axial. Sur cette figure 7 nous voyons trois vues différentes de trois coulisseaux différents mais nous allons utiliser les mêmes références pour les mêmes éléments sur les trois coulisseaux, lesdits éléments étant identiques même s'ils ne concernent pas physiquement le même coulisseau.

Le coulisseau référencé par la référence 900 présente une tête glissant dans la coulisse correspondant de la tête de tournage qui est pratiquement identique à celle décrite précédemment et nous nous abstenons de la décrire. Le coulisseau présente une projection de retenue des outils ayant une section approximative en forme de L. Une première partie 901 a une épaisseur plus importante et elle sert de guidage lors du déplacement du porte-outil et elle est d'une relativement faible largeur, tandis qu'une autre partie 902 est munie sur une face d'une denture 903. La surface dentée 902 du coulisseau 900 est traversée par un trou 904 qui peut être taraudé ou non en fonction de la grandeur de la tête pour le passage d'une vis de fixation 905. En effet, si les dimensions de la tête permettent comme sur la figure 7, on utilise une vis relativement longue à l'extrémité de laquelle un écrou 906 permet de sécuriser l'assemblage. Si les dimensions ne permettent ce dépassement de la vis et l'utilisation de l'écrou, le passage 904 sera taraudé et la vis 905 se vissera dans ledit taraudage.

Le porte-outil 907 a également une forme générale en L dont une branche 908 présente une face de contact avec la face 903 du coulisseau et elle est dentée par une denture complémentaire permettant un guidage précis. La branche sur laquelle se trouve cette surface dentée présente une ouverture oblongue 909 dont les dimensions délimitent le déplacement axial maximum du porte-outil sur le coulisseau. La partie de la deuxième branche du L 910 est munie d'une vis de réglage 911 logée dans un taraudage axial 912 (par rapport à l'axe de la tête du coulisseau et cette vis vient buter sur une surface 913 perpendiculaire à la denture 903. Cette vis 911 est autofreinée par une vis 914 disposée dans un logement taraudé perpendiculaire au logement 912.

L'outil de coupe 915 est fixé à l'extrémité du porte-outil par des moyens conventionnels. Lors du réglage du déplacement axial du porte-outil on desserre la vis 905 et à l'aide de la vis 911 on place le porte-outil à la position désirée de sorte que la vis 911 soit en butée contre la surface 913 du coulisseau et on ressert la vis 905 selon la flèche comme indiqué sur la figure pour obtenir un assemblage aussi compact et rigide que possible.

Selon une variante d'exécution préférée, la surface extérieure de l'aile 908 du porte-outil est légèrement inclinée de sorte que lorsqu'on serre la vis 905, le porte-outil est poussé axialement vers la tête de serrage ce qui assure que le porte-outil s'appuie contre le coulisseau par l'intermédiaire bien entendu de la vis de réglage axial 911 accroissant ainsi la rigidité de l'assemblage et améliorant la précision du réglage axial car cela élimine tout risque de mouvement de recul du porte-outil par rapport au coulisseau lors du blocage de la vis de fixation transversale.

## Revendications

1. Tête de tournage rotative (1) à au moins deux outils (71, 81 ; 915) comprenant un corps cylindrique (10 ; 10') agencé pour être monté sur la broche d'une machine outil, au moins deux coulisseaux (2, 3 ; 900) agencés pour se déplacer radialement par rapport à l'axe de rotation dudit corps cylindrique, chacun des coulisseaux étant solidaire d'un porte-outil (7, 8 ; 907) amovible et commandé par une vis micrométrique (12; 12'), le corps cylindrique comprenant sur une face plane une coulisse (103) par coulisseau formée d'une creusure s'étendant selon un rayon de ladite face plane agencée pour permettre le déplacement du coulisseau, au moins deux plaques (4, 5) étant fixées de manière amovible sur ladite face du corps, de sorte à tenir les coulisseaux dans la coulisse respective dans le sens de l'axe de rotation de la tête de tournage, **caractérisée par le fait que** ladite tête comprend au moins deux logements (14, 15), chacun s'étendant de la surface latérale du corps cylindrique vers l'intérieur parallèlement à ladite coulisse, que lesdits logements cylindriques sont agencés pour accueillir les vis micrométriques (12, 12'), que lesdits logements cylindriques débouchent chacun dans un logement de dimensions supérieures (16, 17 ; 16', 17') et communiquant avec la coulisse correspondante (103), ce dernier logement permettant à un écrou (21, 31 ; 202') solidaire d'un coulisseau (2, 3, 900) de s'y loger et s'y déplacer, la partie filetée d'une vis micrométrique (12, 12') étant engagée dans ledit écrou (20, 31 ; 202').

2. Tête de tournage selon la revendication 1, **caractérisée par le fait que** le corps (10, 10') est muni d'un alésage concentrique à l'axe du corps destiné à la fixation d'un autre outil.

3. Tête selon la revendication 2, **caractérisée par le fait qu'**un écrou de pince (90) est logé dans l'alésage concentrique permettant avec la collaboration d'une douille conique (91) placée dans la broche de la machine sur laquelle la tête est montée de fixer un outil coaxial à la tête au moyen de pinces bi-coniques ou similaires.

4. Tête selon l'une des revendications 1 à 3, **caractérisée par le fait que** le corps est muni de moyens (18, 19) pour bloquer les coulisseaux (2, 3 ; 900) après leurs réglages, lesdits moyens consistant en une vis de blocage par coulisseau agissant chacune sur une des plaques (4, 5) pour bloquer le coulisseau (2, 3 ; 900) par déformation de ladite plaque après serrage desdites vis, en corrélation avec les dégagements aménagés sur le corps de la tête.

5. Tête de tournage selon l'une des revendications 1 à 4, **caractérisée par le fait que** les vis micrométriques (12, 12') sont bloquées dans leur logement respectif au moyen de deux goupilles (G ; G') engagées dans une gorge (121, 131'; 121') située près de la tête de vis (12 ; 12').

6. Tête selon l'une des revendications 1 à 5, **caractérisée par le fait que** les coulisseaux (900) sont agencés pour permettre aussi un réglage axial de l'outil supporté par un porte-outil.

7. Tête selon la revendication 6, **caractérisée par le fait que** chaque coulisseau (900) est muni sur une face d'une denture (903) destinée à collaborer avec une denture conjuguée d'une face du porte-outil, que ladite face du porte-outil présente une ouverture oblongue (909) s'étendant axialement à travers laquelle passe un organe de fixation (905, 906) du porte-outil sur le coulisseau.

8. Tête selon la revendication 7, **caractérisée par le fait que** le porte-outil (907) est muni d'un organe (911) pour le réglage axial agissant parallèlement au sens de réglage en s'appuyant sur une surface (913) du coulisseau perpendiculairement audit sens de déplacement.

9. Tête selon la revendication 7 ou 8, **caractérisée par le fait que** l'organe de fixation est une vis (905, 906) et que la surface du porte-outil (907) sur laquelle la tête de ladite vis s'appuie est inclinée de sorte que lors du serrage le porte-outil est serré contre la surface du coulisseau aussi par l'intermédiaire de l'organe de réglage.

## Patentansprüche

1. Drehkopf (1) mit wenigstens zwei Werkzeugen (71, 81; 915), mit einem zylindrischen Körper (10; 10'), der dazu eingerichtet ist, auf der Spindel einer Werkzeugmaschine montiert zu werden, mit wenigstens zwei Gleitbacken (2, 3; 900), die dazu eingerichtet sind, sich radial in bezug auf die Drehachse des erwähnten zylindrischen Körpers zu verschieben und von denen jede fest an einem abnehmbaren Werkzeughalter (7, 8; 907) angebracht und durch eine Mikrometerschraube (12; 12') betätigbar ist, wobei der zylindrische Körper auf einer ebenen Seite für jede Gleitbacke eine Gleitführung (103) hat, welche durch eine Kehle gebildet ist, die sich längs eines Radius der erwähnten ebenen Seite erstreckt und die Verschiebung der Gleitbacke erlaubt, mit wenigstens zwei Platten (4, 5), die abnehmbar auf der erwähnten Seite des Körpers so befestigt sind, dass die Gleitbacken in der betreffenden Gleitführung in Richtung der Drehachse des Drehkopfes gehalten werden, **dadurch gekennzeichnet, dass** der erwähnte Kopf wenigstens zwei Aufnahmelöcher (14, 15) aufweist, von denen jedes sich von der Seitenfläche des zylindrischen Körpers aus ins Innere, parallel zur erwähnten Gleitführung, erstreckt, dass die erwähnten zylindrischen Aufnahmelöcher dazu eingerichtet sind, die MikrometerSchrauben (12, 12') aufzunehmen und jedes dieser Aufnahmelöcher in einen Raum mit grösseren Abmessungen (16, 17; 16', 17') mündet und mit der betreffenden Gleitführung (103) in Verbindung steht, dass der erwähnte Aufnahmeraum eine fest an einer Gleitbacke (2, 3; 900) angebrachte Schraubenmutter (21, 31; 202') darin aufzunehmen und zu verschieben erlaubt und dass der Gewindeteil einer MikrometerSchraube (12, 12') in die erwähnte Schraubenmutter (21, 31; 202') eingreift.

2. Drehkopf nach Anspruch 1, **dadurch gekennzeichnet, dass** der Körper (10, 10') mit einer zur Körperachse konzentrischen Bohrung versehen ist, die zur Befestigung eines anderen Werkzeugs bestimmt ist.

3. Kopf nach Anspruch 2, **dadurch gekennzeichnet, dass** eine Klemmmutter (90) in der konzentrischen Bohrung sitzt und im Zusammenwirken mit einer konischen Hülse (91), die in der Spindel der mit dem Kopf ausgerüsteten Maschine angeordnet ist, ein Werkzeug koaxial zum Kopf mittels doppelkonischer Klemmen oder Ähnlichem zu befestigen erlaubt.

4. Kopf nach einem der Ansprüche 1 bis 3, **dadurch gekennzeichnet, dass** der Körper mit Mitteln (18, 19) versehen ist, um die Gleitbacken (2, 3; 900) nach ihrer Einstellung zu blockieren, und dass diese Mittel aus einer Blockierungsschraube je Gleitbacke bestehen, welche jede auf eine der Platten (4, 5) wirken, um die Gleitbacke (2, 3: 900) durch Verformung dieser Platte nach Anziehen der erwähnten Schrauben in Korrelation mit im Körper des Kopfes angebrachten Öffnungen zu blockieren.

5. Drehkopf nach einem der Ansprüche 1 bis 4, **dadurch gekennzeichnet, dass** die Mikrometer-Schrauben (12, 12') in ihren jeweiligen Aufnahmelöchern mit Hilfe von Stiften (G; G') blockiert werden, welche in eine Auskehlung (121, 131', 121') eingreifen, die in der Nähe des Kopfes der Schrauben (12, 12') liegt.

6. Kopf nach einem der Ansprüche 1 bis 5, **dadurch gekennzeichnet, dass** die Gleitbacken (900) dazu eingerichtet sind, auch eine axiale Einstellung des vom Werkzeughalter getragenen Werkzeugs zu erlauben.

7. Kopf nach Anspruch 6, **dadurch gekennzeichnet, dass** jede Gleitbacke (900) auf einer Seite mit einer Verzahnung (903) versehen ist, die dazu bestimmt ist, mit einer entsprechenden Verzahnung einer Seite des Werkzeughalters zusammenzuarbeiten, und dass die erwähnte Seite des Werkzeughalters eine sich axial erstreckende Längsöffnung (909) aufweist, durch welche ein Befestigungsorgan (905, 906) zur Befestigung des Werkzeughalters auf der Gleitbacke hindurch ragt.

8. Kopf Nach Anspruch 7, **dadurch gekennzeichnet, dass** der Werkzeughalter (907) mit einem Organ (911) zur axialen Einstellung versehen ist, welches parallel zur Einstellungsrichtung wirkt, indem es sich auf einer Oberfläche (913) der Gleitbacke senkrecht zur erwähnten Verschiebungsrichtung abstützt.

9. Kopf nach Anspruch 7 oder 8, **dadurch gekennzeichnet, dass** das Befestigungsorgan eine Schraube (905, 906) ist und dass die Oberfläche des Werkzeughalters, auf welcher sich der Kopf der erwähnten Schraube abstützt, geneigt ist, derart, dass beim Festspannen der Werkzeughalter auch mittels des Einstellorgans gegen die Oberfläche der Gleitbacke geklemmt wird.

## Claims

1. A rotary turning attachment (1) equipped with at least two tools (71, 81; 915), comprising a cylindrical body (10; 10') designed to be mounted on the spindle of a machine tool, at least two slides (2, 3; 900) designed to move radially with respect to the axis of rotation of said cylindrical body, each of the slides being secured to a removable tool holder (7, 8; 907) and controlled by a micrometer screw (12; 12'), the cylindrical body comprises, on one plane face, one slideway (103) per slide, formed in a recess running along a radius of said plane face and designed to allow the slide to move, at least two plates (4, 5) being attached removably to said face of the body, so as to hold the slides in the respective slideway in the direction of the axis of rotation of the turning attachment; said attachment comprises at least two housings (14, 15), each running from the lateral surface of the cylindrical body inward, parallel to said slideway, said cylindrical housings are designed to take the micrometer screws (12; 12'); said cylindrical housings each open into a housing of larger dimensions (16, 17; 16', 17') communicating with the corresponding slideway (103), the latter housing allowing a nut (21, 31; 202') secured to a slide (2, 3; 900) to be housed and moved therein, the threaded part of a micrometer screw (12, 12') being engaged in said nut (21, 31; 202').

2. The turning attachment as claimed in claim 1, wherein the body (10, 10') is equipped with a bore that is concentric with the axis of the body and intended for the attaching of another tool.

3. The attachment as claimed in claim 2, wherein a taper nut (90) is housed in the concentric bore and, in collaboration with a taper collet (91) in the spindle of the machine on which the attachment is mounted, allows a tool to be attached coaxially with the attachment using double taper collet chucks or the like.

4. The attachment as claimed in one of claims 1 to 3, wherein the body is equipped with means (18, 19) for locking the slides (2, 3; 900) after they have been adjusted, said means consisting in one locking screw per slide each acting on one of the plates (4, 5) so as to lock the slide (2, 3; 900) in place by deformation of said plate after said screws have been tightened, in accordance with the clearances formed on the body of the attachment.

5. The turning attachment as claimed in one of claims 1 to 4, wherein the micrometer screws (12, 12') are locked in place in their respective housing using two pins ( G; G') engaged in a groove (121, 131', 121') located near to the screw head (12, 12').

6. The attachment as claimed in one of claims 1 to 5, wherein the slides (900) are designed also to allow axial adjustment of the tool supported by a tool holder.

7. The attachment as claimed in claim 6, wherein each slide (900) is equipped on one face with a set of teeth (903) intended to collaborate with a mating set of teeth belonging to one face of the tool holder, and said face of the tool holder has an oblong opening (909) running axially through which a member (905, 906) for attaching the tool holder to the slide passes.

8. The attachment as claimed in claim 7, wherein the tool holder (907) is equipped with a member (911) for axial adjustment acting parallel to the direction of adjustment by pressing against a surface (913) of the slide perpendicular to said direction of movement.

9. The attachment as claimed in claim 7 or 8, wherein the attachment member is a screw (905, 906) and the surface of the tool holder (907) against which the head of said screw presses is inclined so that upon tightening, the tool holder is clamped against the surface of the slide via the adjusting member also.
